# EUROPEAN PATENT SPECIFICATION

(11) **EP 1 135 433 B1**
(45) Date of publication and mention of the grant of the patent: **15.06.2005**
(21) Application number: 99965889.1
(22) Date of filing: 24.11.1999
(51) Int. Cl.: C08K 5/00, C08K 3/36, C08K 9/12, C08L 21/00

(54) **IMPROVED PROCESSABILITY OF SILICA-FILLED RUBBER STOCKS**
VERBESSERTE VERARBEITBARKEIT VON SILICA-GEFÜLLTEN KAUTSCHUKZUSAMMENSETZUNGEN
APTITUDE AU TRAITEMENT AMELIOREE DE MASSES DE CAOUTCHOUC CHARGEES DE SILICE

(30) Priority: 01.12.1998 US 203438
(43) Date of publication of application: 26.09.2001
(73) Proprietor: Bridgestone Corporation, Tokyo 104-8340 (JP)
(72) Inventor: HERGENROTHER, William, L., Akron, OH 44313 (US); HILTON, Ashley, S., Massillon, OH 44646 (US); COLE, William, M., Clinton, OH 44216 (US); OZIOMEK, James, Cuyahoga Falls, OH 44223 (US)
(74) Representative: Albrecht, Thomas, Dr.
(86) International application number: PCT/US1999/027890
(87) International publication number: WO 2000/032684

(56) References cited:
- EP-A- 0 761 734
- EP-A- 0 795 577
- EP-A- 0 890 603
- EP-A- 0 890 606
- DE-A- 4 308 311
- US-A- 4 436 847

## Description

### Field of the Invention

The present invention relates to the processing and vulcanization of diene polymer and copolymer elastomer-containing rubber stocks and, more particularly, silica-filled rubber stocks using processing aids with or without other reinforcing fillers.

### Background of the Invention

In the art it is desirable to produce elastomeric compounds exhibiting reduced hysteresis when properly compounded with other ingredients such as reinforcing agents, followed by vulcanization. Such elastomers, when compounded, fabricated and vulcanized into components for constructing articles such as tires, power belts, and the like, will manifest properties of increased rebound, decreased rolling resistance and less heat-build up when subjected to mechanical stress during normal use.

The hysteresis of an elastomer refers to the difference between the energy applied to deform an article made from the elastomer and the energy released as the elastomer returns to its initial, undeformed state. In pneumatic tires, lowered hysteresis properties are associated with reduced rolling resistance and heat build-up during operation of the tire. These properties, in turn, result in lower fuel consumption for vehicles using such tires.

In such contexts, the property of lowered hysteresis of compounded, vulcanizable elastomer compositions is particularly significant. Examples of such compounded elastomer systems are known to the art and typically include at least one elastomer (that is, a natural or synthetic polymer exhibiting elastomeric properties, such as a rubber), a reinforcing (or non-reinforcing) filler agent (such as finely divided carbon black, thermal black, or mineral fillers such as clay and the like) and a vulcanizing system such as a sulfur-containing vulcanizing (i.e., curing) system.

Recently, precipitated silica has been increasingly used as a reinforcing particulate filler in carbon black-filled rubber components of tires and mechanical goods. While providing excellent properties, including reduced hysteresis, to the rubber stocks, these silica-loaded rubber stocks are unfortunately not easily produced, exhibiting relatively poor processability characteristics.

In particular, European patent application EP-A-0 795 577 relates to a rubber composition characterized by being comprised of (A) 100 parts by weight of at least one diene-based elastomer, (B) 30 to 100 phr particulate reinforcing filler composed of silica and carbon black, composed of 30 to 100 phr of precipitated silica and correspondingly zero to 50 phr of carbon black, wherein the weight ratio of silica to carbon black is at least about 1/1, where carbon black is used, (C) at least one silica coupler having a moiety reactive with said silica and a moiety interactive with said elastomer(s), (D) 0.5 to 10 phr of silica-reactive, silane-containing hydrophobating agent wherein the molar ratio based on silane functionality of hydrophobating agent to silica coupler is in a range of 0.1/1 to 2/1; wherein said hydrophobating agent is an alkyl alkoxysilane of the general formula: Rₙ (R'O)ₘ Si where R and R' are individually selected from the group consisting of primary, secondary and tertiary alkyl radicals and alkaryl radicals having 1-30 carbon atoms; n and m are whole integers from 1-3 such that the sum of n and m is 4. Furthermore, European patent application EP-A-0 761 734 describes a rubber mixture for the tread strip of a vehicle tire, based on at least one polymer from the group of diene rubbers and also containing, each based on 100 parts by weight rubber in the mixture, 5 to 100 parts by weight finely divided, precipitated silica, 0 to 80 parts by weight carbon black, optionally 0.2 to 10 parts by weight silane coupling agent and 0.5 to 20 parts by weight of at least one non-aromatic, viscosity-lowering substance selected from the group consisting of 1,2-pentanediol, 2-methyl-2-propyl-1,3-propanediol, 2-butyl-2-ethyl-1,3-propanediol, 2-sec.-butyl-2-methyl-1,3-propanediol, trimethylolpropane(2-ethyl-2-hydroxymethyl-1,3-propanediol), glycerin monostearat, sorbitan monostearat, or sorbitan monooleat. Moreover, German patent application DE-A 43 08 311 relates to the use of precipitated silica having a specific BET surface area of >240 m²/g for improving the transparency and the brightness properties of vulcanizable bright rubber mixtures. Therein, the rubber mixtures having high transparency and brightness properties are used for shoe soles and certain kinds of gas kits and washers.

### Summary of the Invention

Other work has resulted in improvements in processing characteristics for silica-loaded rubber stocks, particularly that work disclosed in European Patent Publications EP 0 890 603A1 and EP 0 890 606A1. This invention carries forward such work.

The present invention provides reinforcing filler-supported additives, such as a mineral fillers, capable of improving the processability of the formulations of diene polymer elastomers reinforced with silica filler.

The present invention also provides a process for decreasing the level of bis[3-(triethoxysilyl)propyl]tetrasulfide (Si69) in silica-filled elastomeric vulcanizable compounds.

The present invention also provides vulcanizable silica-filled elastomeric compounds having enhanced physical properties, including decreased hysteresis and increased tear strength.

One aspect of the invention is a process for the preparation of a silica-filled, vulcanized elastomeric compound comprising: (a) mixing (1) 100 parts by weight of an elastomer; (2) from 5 to 100 parts by weight of a reinforcing filler selected from the group consisting of silica filler or mixtures thereof with carbon black, per 100 parts of said elastomer, wherein the silica filler has a BET surface area of 150 to 220m²/g; (3) from 0.1 to 150 percent by weight, based on said silica filler, of a combination of an alkylalkoxysilane and an additional processing aid selected from the group consisting of fatty acid esters of hydrogenated and non-hydrogenated C₅ and C₆ sugars, polyoxyethylene derivatives of fatty acid esters of hydrogenated and non-hydrogenated C₅ and C₆ sugars and mixtures thereof; (4) optionally from 0 to 40 parts by weight of a non-reinforcing filler, per 100 parts elastomer; (5) optionally from 0 to 20 percent by weight of bis[(triethoxysilyl)-propyl]tetrasulfide, based upon the weight of said silica filler; and (6) a cure agent; wherein said alkylalkoxysilane and said additional processing aid are first mixed with and supported on at least some of either said silica reinforcing filler or said non-reinforcing filler prior to mixing with said elastomer, and wherein the minimal amount for the alkylalkoxysilane and said additional processing aid is about one part by weight; and (b) effecting vulcanization.

Another aspect of the invention is a compound obtainable from the above inventive process.

Another aspect of the invention is a pneumatic tire comprising tread stock vulcanized from the above vulcanizable silica-filled compound.

Another aspect of the invention is a pneumatic tire comprising tread stock obtainable from the above inventive process.

### Embodiments of the Invention

One skilled in the art is directed to the disclosures of European Patent Publications EP 0 890 603A1 and EP 0 890 606A1, wherein one can find full explanations of the work upon which this invention is built. Because of the availability of such publications, the text of those disclosures is not repeated here but is relied upon.

Examples of this invention are provided below, with brief explanations of the embodiments of this invention that emphasize the points of departure from the disclosures of European Patent Publications EP 0 890 603A1 and EP 0 890 606A1.

In one embodiment, the present invention provides a silica-filled, vulcanizable elastomeric compound useful as tread stocks for pneumatic tires that employs a combination of an alkyl alkoxysilane and an additional processing aid as a replacement for Si69, wherein the processing aid is selected from the group consisting of fatty acid esters of hydrogenated and non-hydrogenated C₅ and C₆ sugars, polyoxyethylene derivatives of fatty acid esters of hydrogenated and non-hydrogenated C₅ and C₆ sugars, and mixtures thereof and wherein the processing aids are supported on the silica filler or other filler, e.g., either another reinforcing filler such as carbon black, or a non-reinforcing filler such as one of a number of mineral fillers or the like.

In another embodiment, from about 0.1 to about 150 percent by weight of a combination of an alkyl alkoxysilane and an additional processing aid is used in the present invention as a processing aid. Thus, given the amount of silica filler typically preferred in the subject composition, up to about 150 parts by weight of the processing aid, per 100 parts elastomer, may be used, representing a 60/40 ratio of processing aid to silica.

In yet another embodiment, a mixture of a filler and a filler-supported processing aid selected from the group consisting of a combination of an alkyl alkoxysilane and fatty acid esters of hydrogenated and non-hydrogenated C₅ and C₆ sugars, polyoxyethylene derivatives of fatty acid esters of hydrogenated and non-hydrogenated C₅ and C₆ sugars, and mixtures thereof, is preferably added to the elastomer in an amount of about 5 to about 100 parts by weight per 100 parts of the elastomer. It should be stressed that when a silica-supported or carbon black-supported processing aid is used, the non-reinforcing fillers, including mineral fillers or other processing aids are not required in the elastomeric formulation. However, it will be appreciated that if mineral fillers are used, they may be used to support the processing aid(s). Preferably, the processing aid is added to the silica or other filler in a mixture ratio of from about 1:99 to about 60:40, with a 50:50 mixture being most preferred.

In yet another embodiment, certain additional fillers can be utilized according to the present invention as processing aids which include, but are not limited to, mineral fillers, such as clay (hydrous aluminum silicate), talc (hydrous magnesium silicate), and mica as well as non-mineral fillers such as urea and sodium sulfate. Preferred micas contain principally alumina, silica and potash, although other variants are also useful, as set forth below. The additional fillers are also optional and can be utilized in the amount of from 0 parts to about 40 parts per 100 parts of polymer (phr), preferably in an amount from about 1 to about 20 phr. It will be understood that these mineral fillers can also be used as non-reinforcing fillers to support the processing aids of the present invention.

Further, the present invention also includes a vulcanizable silica-filled compound obtainable from the process according to the present invention. Preferably, the compound further contains a natural rubber.

Further, the present invention also includes a pneumatic tire comprising tread stock vulcanized from the above compound made from the process according to the present invention.

The elastomer can be a diene monomer homopolymer or a copolymer of a diene monomer and a monomer selected from the group consisting of monovinyl aromatic monomers and triene monomers.

The alkylalkoxysilane can be represented by the formula (R1)₂Si(OR₂)₂ or R1Si(OR₂)₃, wherein each R1 independently is selected from the group consisting of C₁ to C₁₈ aliphatic, C₅ to C₁₂ cycloaliphatic, and C₆ to C₁₈ aromatic; and wherein the alkoxy groups are the same or are different, each R₂ independently containing from one to about 6 carbon atoms.

The alkylalkoxysilane can be selected from the group consisting of octyltriethoxy silane, octyltrimethyloxy silane, (3-glycidoxypropyl)trimethoxy silane, (3-glycidoxypropyl)triethoxy silane, hexyltrimethoxy silane, ethyltrimethyoxy silane, propyltriethoxy silane, cyclohexyltrimethoxy silane, cyclohexyltriethyoxysilane, dimethyldimethyoxy silane, 3-chloropropyltriethoxy silane, and i-butyltriethoxy silane. Preferably, the alkylalkoxysilane is octyltriethoxysilane.

The additional processing aid is selected from the group consisting of fatty acid esters of hydrogenated and non-hydrogenated C₅ and C₆ sugars; polyoxyethylene derivatives of fatty acid esters of hydrogenated and non-hydrogenated C₅ and C₆ sugars and mixtures thereof. Preferably, that additional processing aid is selected from the group consisting of at least one sorbitan ester of an oleate, laurate, palmitate and stearate fatty acids, polyoxyethylene derivatives thereof and mixtures thereof. More preferably, that additional processing aid is sorbitan monooleate.

Preferably for the above process, the elastomer is a styrene butadiene rubber. More preferably, the elastomer is a copolymer of styrene butadiene rubber and butyl rubber. Even more preferably, the elastomer is mixed with carbon black.

The process also optionally includes mixing insoluble sulfur prior to the vulcanizing step.

The present invention includes a process for the preparation of a silica-filled, vulcanized elastomeric compound comprising the steps of (a) mixing (1) 100 parts by weight of an elastomer; (2) from 5 to 100 parts by weight of a reinforcing filler selected from the group consisting of silica filler or mixtures thereof with carbon black, per 100 parts of said elastomer, wherein the silica filler has a BET surface area of 150 to 224m²/g; (3) from 0.1 to 150 percent by weight, based on said silica filler, of a combination of an alkylalkoxysilane and an additional processing aid selected from the group consisting of fatty acid esters of hydrogenated and non-hydrogenated C₅ and C₆ sugars, polyoxyethylene derivatives of fatty acid esters of hydrogenated and non-hydrogenated C₅ and C₆ sugars and mixtures thereof; (4) optionally from 0 to 40 parts by weight of a non-reinforcing filler, per 100 parts elastomer; (5) optionally from 0 to 20 percent by weight of bis[(triethoxysilyl)-propyl]tetrasulfide, based upon the weight of said silica filler; and (6) a cure agent; wherein said alkylalkoxysilane and said additional processing aid are first mixed with and supported on at least some of either said silica reinforcing filler or said non-reinforcing filler prior to mixing with said elastomer, and wherein the minimal amount for the alkylalkoxysilane and said additional processing aid is about one part by weight; and (b) effecting vulcanization.

The process utilizes a vulcanizable silica-filled compound which comprises 100 parts by weight of an elastomer; from 5 to 100 parts by weight of a reinforcing filler per 100 parts of elastomer, wherein said reinforcing fillers are selected from the group consisting of silica filler and mixtures thereof with carbon black, wherein the silica filler has a BET surface of 150 to 220 m²/g; optionally from 0 to about 20 percent by weight of bis[3-(triethoxysilyl)propyl]tetrasulfide, based upon the weight of said silica filler; from 0.1 to 150 percent by weight of a combination of an alkylalkoxysilane and an additional processing aid selected from the group consisting of fatty acid esters of hydrogenated and non-hydrogenated C₅ and C₆ sugars, polyoxyethylene derivatives of fatty acid esters of hydrogenated and non-hydrogenated C₅ and C₆ sugars, and mixtures thereof; optionally from 0 to 40 parts by weight of a non-reinforcing filler other than silica or carbon black; and a cure agent.

Further, the present invention also includes a pneumatic tire comprising tread stock vulcanized from the above mentioned compound made from the process according to the present invention.

The process and vulcanizable compound utilize the same preferences of process steps and ingredients, except as noted below.

Preferably, silica filler used in the process and compound has a pH of about 5.5 to about 7.

Preferably, the process and compound has an amount of said carbon black reinforcing filler ranging from 0 to 50 parts by weight, per 100 parts by weight of elastomer, and an amount of said reinforcing silica filler ranging from 1 to 100 parts, per 100 parts of elastomer, with the proviso that where carbon is 0, at least 30 phr of silica is employed.

Preferably, the fatty acid esters of hydrogenated and non-hydrogenated C₅ and C₆ sugars are selected from the group consisting of sorbitan monooleate, sorbitan dioleate, sorbitan trioleate, sorbitan sesquioleate, sorbitan laurate, sorbitan palmitate and sorbitan stearate, while the polyoxyethylene derivatives of fatty acid esters of hydrogenated and non-hydrogenated C₅ and C₆ sugars are selected from the group consisting of POE (20) sorbitan stearate; POE (20) sorbitan oleate; POE (20) sorbitan tri-oleate; POE (20) sorbitan sesquioleate; POE (20) sorbitan laurate and POE (20) sorbitan palmitate. More preferably, the processing aid comprises a mixture of at least one fatty acid ester of hydrogenated and non-hydrogenated C₅ and C₆ sugars and at least one polyoxyethylene derivative of a fatty acid ester of hydrogenated and non-hydrogenated C₅ and C₆ sugars.

Preferably, the non-reinforcing filler is selected from the group consisting of mica, talc, urea, clay, sodium sulfate and mixtures thereof and more preferably, is included with the mixture of at least one fatty acid ester of hydrogenated and non-hydrogenated C₅ and C₆ sugars.

The alkyl alkoxysilanes used in the process according to the present invention are selected from the group consisting of octyltriethoxy silane, octyltrimethyloxy silane, (3-glycidoxypropyl)trimethoxy silane, (3-glycidoxypropyl)triethoxy silane, hexyltrimethoxy silane, ethyltrimethyoxy silane, propyltriethoxy silane, cyclohexyltrimethoxy silane, cyclohexyltriethyoxy silane, dimethyldimethyoxy silane, 3-chloropropyltriethoxy silane and i-butyltriethoxy silane.

The following examples amplify upon these embodiments.

### Examples

Testing of silica-filled vulcanizable elastomeric compounds was conducted to determine the effect silica-supported and carbon black-supported alkyl alkoxysilanes and polyoxyethylene derivatives of fatty acid esters of hydrogenated and non-hydrogenated sugars as processing aids in the elastomeric stock formulations. The basic formulation. C-CC, of the elastomeric stock formulation is shown and described in Table I below.

The physical properties of the Example Nos. 1-6 and the control, C-DD, are shown and described in Table II, below. Example Nos. 2-6 indicated a Mooney viscosities (ML 1+4/100°C) comparable to the control, C-DD, with 3 phr of Si69 processing aid. Tensile properties of the cured elastomeric stocks, containing processing aids comprising octyl triethoxy silane and sorbitan oleate supported on silica are comparable to the tensile properties of the control elastomeric stock formulation, C-DD, containing 3 phr of Si69 processing aid. Curing at 171°C for 20 minutes was used to obtain the physical properties set forth below.

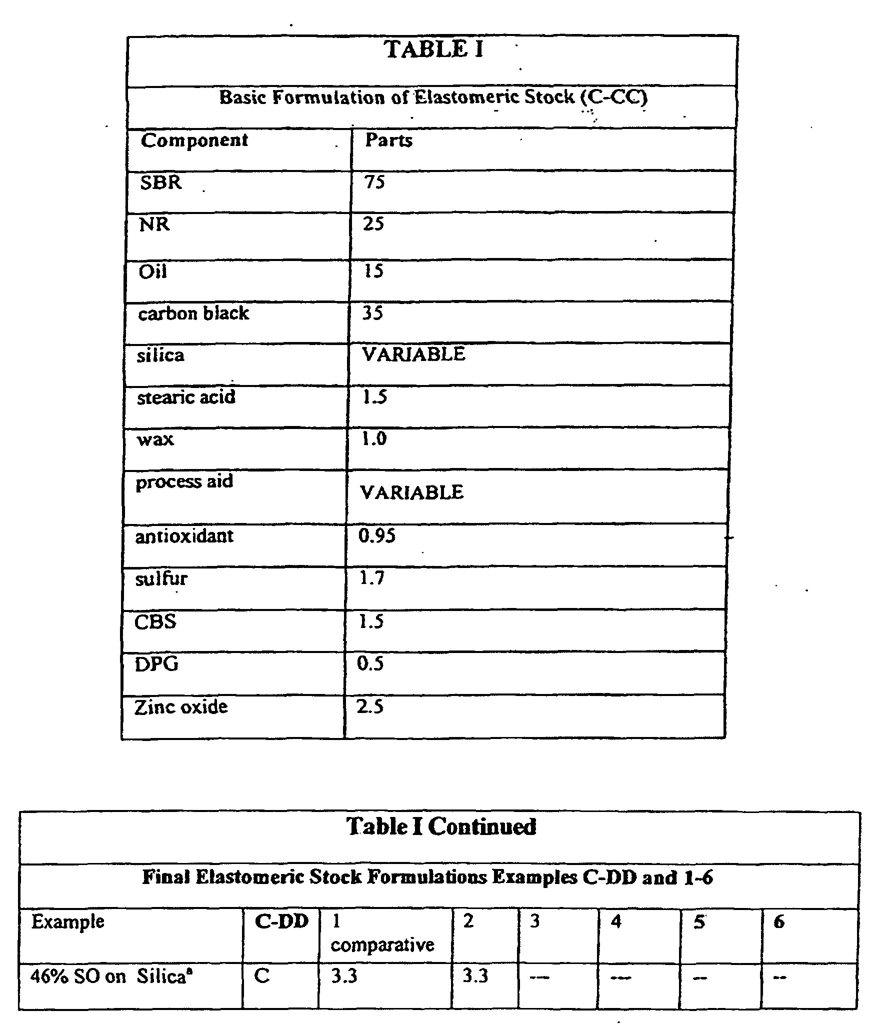

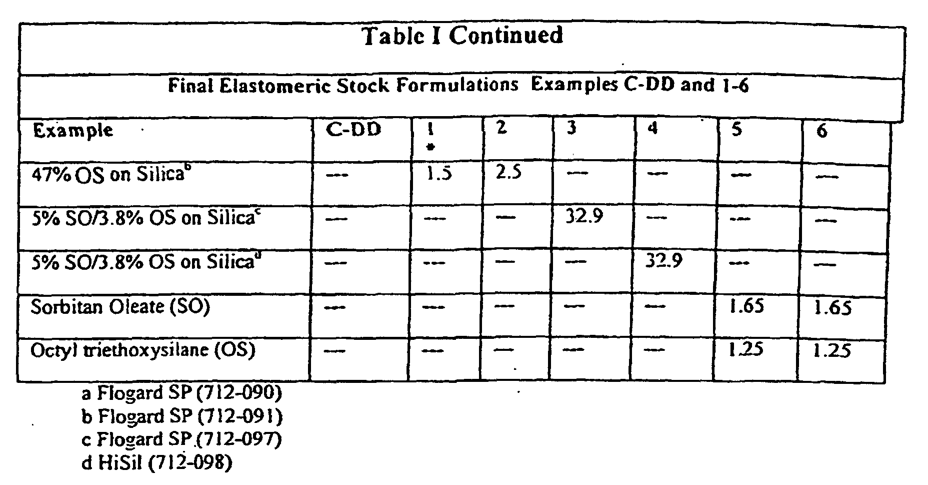

**Table II**

| **Physical Properties of Elastomeric Formulations** | | | | | | | |
|---|---|---|---|---|---|---|---|
| **Example** | **C-DD** | **1** * | **2** | **3** | **4** | **5** | **6** |
| **Mooney Viscosity** | | | | | | | |
| ML 1+4/100°C | 77.6 | 132.4 | 75.2 | 77.9 | 80.8 | 64.6 | 72.9 |
| T80 | 9.7 | 43.5 | 7.5 | 8.5 | 93 | 6.5 | 7.4 |

| **MDR Monsanto Cure at 165°C** | | | | | | | |
|---|---|---|---|---|---|---|---|
| ML | 11.01 | 3.86 | 3.48 | 3.7 | 3.75 | 3.13 | 3.32 |
| MH | 35.37 | 20.42 | 19.39 | 19.67 | 20.28 | 18.89 | 19.1 |
| ts2 | 2:36 | 2:08 | 2:16 | 2:26 | 2:16 | 2:22 | 2:24 |
| tc90 | 17:06 | 13:55 | 11:14 | 10:37 | 11:14 | 10:41 | 10:02 |
| tan δ at MH | ---- | 0.144 | 0.145 | 0.158 | 0.15 | 0.134 | 0.135 |

| **Ring Tensile at 24°C** | | | | | | | |
|---|---|---|---|---|---|---|---|
| 50% Modulus.psi | 221 | 256 | 230 | 209 | 219 | 207 | 227 |
| 100% Modulus, psi | 322 | 403 | 360 | 331 | 356 | 331 | 360 |
| 200% Modulus, psi | 615 | 819 | 766 | 678 | 739 | 697 | 765 |
| 300% Modulus, psi | 1008 | 1407 | 1338 | 1177 | 1279 | 1234 | 1335 |
| Tensile Strength, psi | 1852 | 2082 | 1899 | 1726 | 1959 | 1840 | 1886 |
| % Elongation | 474 | 400 | 386 | 392 | 407 | 395 | 381 |
| Break energy, in-lbs/in² | 4012 | 3762 | 3229 | 3013 | 3549 | 3156 | 3166 |

| **Ring Tensile at 100°C** | | | | | | | |
|---|---|---|---|---|---|---|---|
| 50% Modulus,psi | 189 | 229 | 208 | 212 | 196 | 193 | 190 |
| 100% Modulus, psi | 263 | 350 | 323 | 312 | 303 | 296 | 300 |
| 200% Modulus, psi | 518 | 685 | 654 | 632 | 607 | 614 | 604 |
| 300% Modulus, psi | 869 | 1140 | 1107 | 1022 | 1025 | 1070 | 1023 |
| Tensile Strength, psi | 1299 | 1248 | 1227 | 1203 | 1075 | 1097 | 1148 |
| % Elongation | 412 | 322 | 322 | 327 | 310 | 308 | 326 |
| Break energy, in-lbs/in² | 2496 | 1894 | 1837 | 1813 | 1557 | 1552 | 1761 |
| Ring Tear at 171°C, psi | 184.9 | 175.6 | 140.8 | 152.2 | 108.2 | 118.4 | 154 |
| Wet Stanley London(#/std) | 59/53 | 57/52 | 57/52 | 58/52 | 58/52 | 57/52 | 57/52 |
| Shore A, at RT | ---- | 72 | 70 | 67 | 67 | 67 | 66 |
| Shore A at 50°C | ---- | 67 | 67 | 65 | 67 | 66 | 65 |

| **Rheometrics at 7% Strain** | | | | | | | |
|---|---|---|---|---|---|---|---|
| tan δ at 24°C | 0.193 | 0.195 | 0.169 | 0.173 | 0.175 | 0.166 | 0.180 |
| δ G' x 10⁻⁷ at 24°C | 4.239 | 4.506 | 4.879 | 5.267 | 4.718 | 3.94 | 4.712 |
| 24°C G' x 10⁻⁷ at 14.5% | 3.006 | 3.138 | 3.261 | 3.01 | 3.127 | 2.856 | 3.422 |
| tan δ at 65°C | 0.152 | 0.153 | 0.155 | 0.143 | 0.145 | 0.138 | 0.149 |
| δ G' x 10⁻⁷ at 65°C | 2.689 | 3.779 | 5.667 | 3.939 | 4.554 | 4.172 | 3.836 |
| 50°C G' x 10⁻⁷ at 14.5% | 2.42 | 2.736 | 2.77 | 2.731 | 2.992 | 2.509 | 2.6 |
| Mr, g/mol from Tensile Retraction | 13680 | 10440 | ---- | 11320 | ---- | ---- | ---- |

| | | | | | | | |
|---|---|---|---|---|---|---|---|
| * comparative | | | | | | | |

Further testing of silica-filled vulcanizable elastomeric stock formulations was conducted to determine the effects of the silica and carbon black-supported processing aids on the physical properties and processability of the elastomeric formulations after six months of ambient storage.

The elastomeric stock formulations were prepared according to Table III, below, and the physical properties were evaluated after curing at 170°C for 20 minutes, followed by six months of ambient aging. The data for the physical properties and processability of the elastomeric formulations for the ambient aging study are shown in Table IV, below.

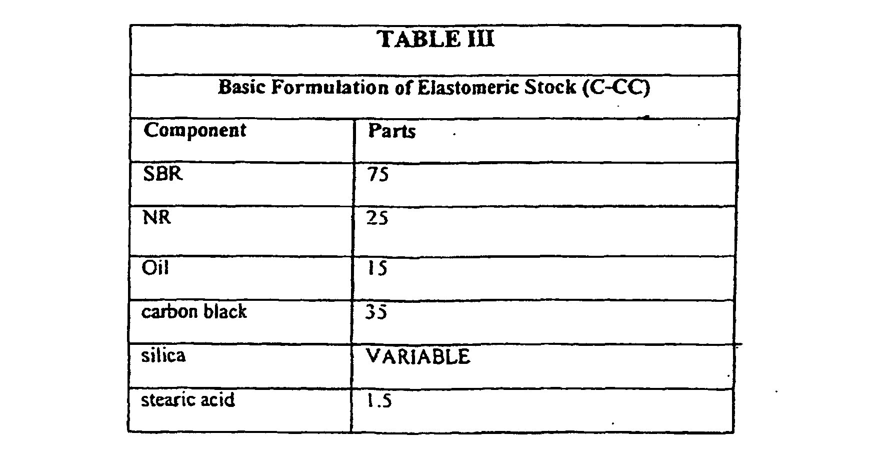

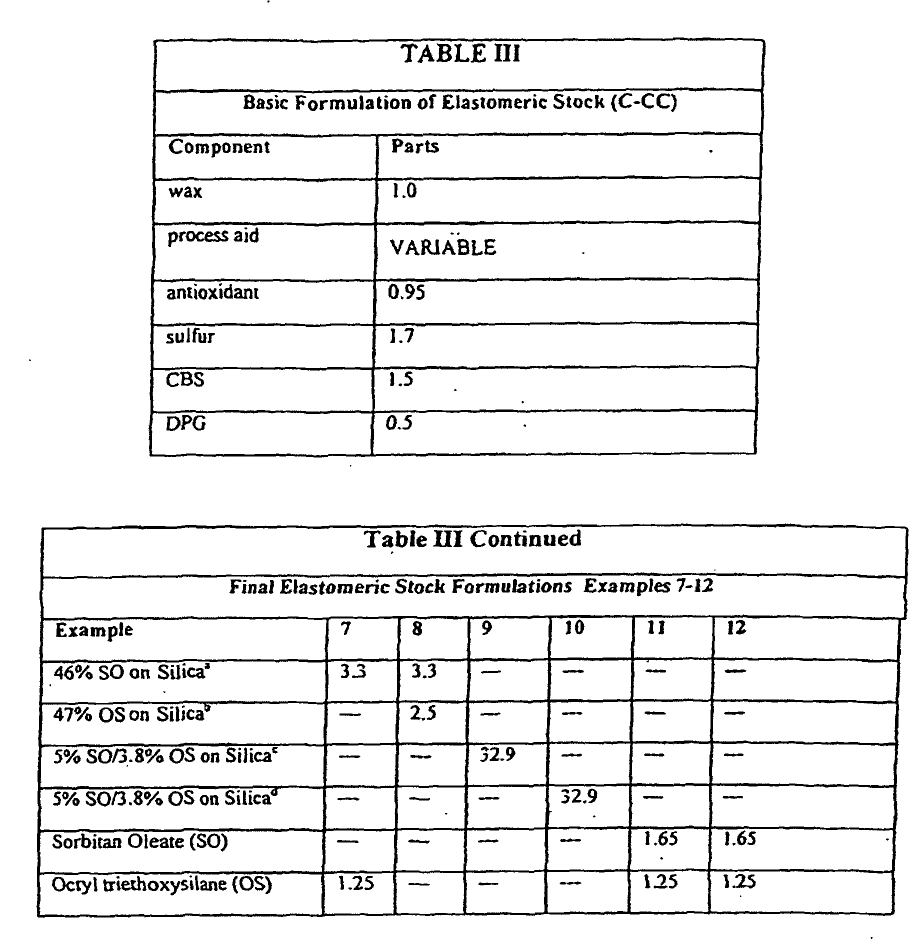

**Table IV**

| **Physical Properties of Elastomeric Formulations After Ambient aging for 6 months** | | | | | | |
|---|---|---|---|---|---|---|
| **Example** | **7** | **8** | **9** | **10** | **11** | **12** |
| Mooney Viscosity | | | | | | |
| ML 1+4/100°C | 77 | 80.8 | 78.9 | 78.9 | 74.8 | 78.1 |

| **MDR Monsanto Cure at 165°C** | | | | | | |
|---|---|---|---|---|---|---|
| ML | 2.97 | 3.62 | 3.5 | 3.69 | 3.29 | 3.47 |
| MH | 16.12 | 19.65 | 19.02 | 19.62 | 18.72 | 16.49 |
| ts2 | 2:52 | 2:42 | 3:04 | 3:05 | 2:49 | 2:54 |
| tc90 | 14:27 | 10:47 | 9:37 | 9:11 | 9:41 | 14:00 |
| tan δ at MH | 0.2 | 0.093 | 0.102 | 0.103 | 0.091 | 0.189 |

| **Ring Tensile at 24°C** | | | | | | |
|---|---|---|---|---|---|---|
| 50% Modulus,psi | 181 | 159 | 172 | 166 | 171 | 165 |
| 100% Modulus, psi | 333 | 286 | 316 | 296 | 310 | 294 |
| 200% Modulus, psi | 778 | 676 | 754 | 691 | 740 | 696 |
| 300% Modulus, psi | 1415 | 1242 | 1389 | 1273 | 1375 | 1288 |
| Tensile Strength, psi | 2551 | 2233 | 2442 | 2298 | 2548 | 2438 |
| % Elongation | 448 | 445 | 441 | 447 | 454 | 461 |
| Break energy, in-lbs/in² | 4735 | 4088 | 4521 | 4235 | 4731 | 4605 |

| **Ring Tensile at 100°C** | | | | | | |
|---|---|---|---|---|---|---|
| 50% Modulus,psi | 131 | 131 | 146 | 153 | 146 | 139 |
| 100% Modulus, psi | 244 | 240 | 267 | 274 | 266 | 250 |
| 200% Modulus, psi | 541 | 532 | 596 | 596 | 590 | 546 |
| | | | | | | |
| 300% Modulus, psi | 973 | 963 | 1073 | 1076 | 1069 | 982 |
| Tensile Strength, psi | 1285 | 1400 | 1356 | 1433 | 1430 | 1396 |
| % Elongation | 367 | 394 | 356 | 369 | 371 | 388 |
| Break energy, in-lbs/in² | 2024 | 2353 | 2069 | 2266 | 2270 | 2330 |
| New Lambourn at 65%, g lost | 179 | 181 | 157 | 147 | 158 | 149 |
| New Lamboum at 65%, INDEX | 0.145 | 0.148 | 0.1456 | 0.1506 | 0.1454 | 0.1481 |
| Ring Tear at 171°C, psi | 0.97 | 0.95 | 0.96 | 0.93 | 0.96 | 0.95 |
| Wet Stanley London(#/std) | 53/48.5 | 57/48.5 | 53/48.5 | 53/48.5 | 56/48.5 | 53/48.5 |
| Shore A, at RT | 66.4 | 67 | 67.7 | 67.5 | 65.8 | 64.1 |
| Shore A at 50°C | 63.6 | 64.3 | 64.8 | 64.9 | 63.9 | 64.1 |

| **Rheometrics at 7% Strain** | | | | | | |
|---|---|---|---|---|---|---|
| Tan δ at 24°C | 0.1779 | 0.169 | 0.181 | 0.1843 | 0.159 | 0.1724 |
| 24°C G' x 10⁻⁷ at 7% | 0.628 | 0.605 | 0.657 | 0.739 | 0.491 | 0.577 |
| δ G' x 10⁻⁷ at 24°C | 4.772 | 4.224 | 5.233 | 5.909 | 3.13 | 4.087 |
| 24°C G' x 10⁻⁷ at14.5% | 2.652 | 2.779 | 2.779 | 3.009 | 2.48 | 2.572 |
| tan δ at 50°C | 0.15 | 0.1391 | 0.1524 | 0.1544 | 0.1417 | 0.1412 |
| 50°C G' x 10⁻⁷ at 7% | 0.462 | 0.441 | 0.482 | 0.521 | 0.38 | 0.401 |
| δ G' x 10⁻⁷ at 50°C | 3.648 | 3.374 | 3.941 | 4.428 | 2.829 | 2.995 |
| 50°C G' x 10⁻⁷ at 14.5% | 2.417 | 2.536 | 2.477 | 2.644 | 2.151 | 2.281 |

It is apparent from the data contained in Table IV, that elastomeric formulations containing a silica-supported or carbon black-supported processing aid selected from the group consisting of an alkyl alkoxysilane, fatty acid ester of hydrogenated or non-hydrogenated C₅ and C₆ sugars, e.g., sorbitan, and ethoxylated derivatives of fatty acid esters of these sugars provide physical properties, after six months of ambient aging, comparable to the control elastomeric formulation containing 3 phr of Si69 as a processing aid (C-DD).

Thus, it should be evident that the process of the present invention is useful in improving the processability of formulations of diene polymer elastomers containing silica filler by reducing the viscosity of silica-filled elastomeric vulcanizable compounds. It is further demonstrated that the present invention provides vulcanizable silica-filled elastomeric compounds having enhanced physical properties. Practice of the present invention allows a reduction of Si69 which is added to vulcanizable rubber compositions containing silica fillers. The reduction can be effected by the addition of the processing aids described herein, mineral and non-mineral fillers as well as combinations of more than one.

## Claims

1. A process for the preparation of a silica-filled, vulcanized elastomeric compound comprising:
(a)mixing
(1) 100 parts by weight of an elastomer;
(2) from 5 to 100 parts by weight of a reinforcing filler selected from the group consisting of silica filler or mixtures thereof with carbon black, per 100 parts of said elastomer, wherein the silica filler has a BET surface area of 150 to 220m²/g;
(3) from 0.1 to 150 percent by weight, based on said silica filler, of a combination of an alkylalkoxysilane and an additional processing aid selected from the group consisting of fatty acid esters of hydrogenated and non-hydrogenated C₅ and C₆ sugars, polyoxyethylene derivatives of fatty acid esters of hydrogenated and non-hydrogenated C₅ and C₆ sugars and mixtures thereof;
(4) optionally from 0 to 40 parts by weight of a non-reinforcing filler, per 100 parts elastomer;
(5) optionally from 0 to 20 percent by weight of bis[(triethoxysilyl)-propyl]tetrasulfide, based upon the weight of said silica filler; and
(6) a cure agent;
wherein said alkylalkoxysilane and said additional processing aid are first mixed with and supported on at least some of either said silica reinforcing filler or said non-reinforcing filler prior to mixing with said elastomer,
and wherein the minimal amount for the alkylalkoxysilane and said additional processing aid is about one part by weight; and
(b) effecting vulcanization.

2. The process of claim 1, wherein the alkylalkoxysilane is represented by the formula (R₁)₂Si(OR₂)₂ or R₁Si(OR₂)₃, wherein each R₁ independently is selected from the group consisting of C₁ to C₁₈ aliphatic and C5 to C12 cycloaliphatic; and wherein the alkoxygroups are the same or are different, each R₂ independently containing from one to 6 carbon atoms.

3. The process of claim 2, wherein the alkylalkoxysilane is selected from the group consisting of octyltriethoxy silane, octyltrimethoxy silane, (3-glycidoxypropyl)trimethoxy silane, (3-glycidoxypropyl)triethoxy silane, hexyltrimethoxy silane, ethyltrimethoxy silane, propyltriethoxy silane, cyclohexyltrimethoxy silane, cyclohexyltriethoxy silane, dimethyldimethoxy silane, 3-chloropropyltriethoxy silane and i-butyltriethoxy silane.

4. The process of any of claims 1 to 3, wherein the elatomer is a diene monomer homopolymer or a copolymer of at least one diene and at least one monomer selected from the group consisting of monovinyl aromatic monomers and triene monomers.

5. The process of any of claims 1 to 4, wherein the process further includes mixing insoluble sulfur prior to vulcanizing.

6. The process of any of claims 1 to 5, wherein the elastomer is styrene-butadiene rubber.

7. The process of any of claims 1 to 6, wherein the elastomer is a copolymer of styrene-butadiene rubber and butyl rubber.

8. The process of any of claims 1 to 7, wherein the elastomer further contains natural rubber.

9. The process of any of claims 1 to 8, wherein the fatty acid esters of hydrogenated and non-hydrogenated C₅ and C₆ sugars are selected from the group consisting of sorbitan monooleate, sorbitan diolate, sorbitan trioleate, sorbitan sesquioleate, sorbitan laurate, sorbitan palmitate and sorbitan stearate, and wherein
the polyoxyethylene derivatives of fatty acid esters of hydrogenated and non-hydrogenated C5 and C6 sugars are selected from the group consisting of POE (20) sorbitan stearate; POE (20) sorbitan oleate; POE (20) sorbitan trioleate; POE (20) sorbitan sesquioleate; POE (20) sorbitan laurate and POE (20) sorbitan palmitate.

10. The process of any of claims 1 to 9, wherein the additional processing aid is a mixture of at least one fatty acid ester of hydrogenated and non-hydrogenated C₅ and C₆ sugars and at least one polyoxyethylene derivative of a fatty acid ester of hydrogenated and non-hydrogenated C₅ and C₆ sugars.

11. The process of any of claims 1 to 10, wherein the amount of said carbon black reinforcing filler ranges from 0 to 50 parts by weight, per 100 parts by weight of elastomer, and the amount of said reinforcing silic filler ranges from 1 to 100 parts, per 100 parts of elastomer, with the priviso that where carbon black is 0, at least 30 phr of silica is employed.

12. A compound obtainable from a process of any of claims 1 to 11.

13. A pneumatic tire comprising tread stock vulcanized from a compound of claim 12.

14. A pneumatic tire comprising tread stock obtainable from a process of any of claims 1 to 11.

## Patentansprüche

1. Verfahren zur Herstellung eines mit Siliciumdioxid gefüllten vulkanisierten elastomeren Compounds, umfassend:
(a) das Vermischen von
(1) 100 Gew.-Teilen eines Elastomeren;
(2) 5 bis 100 Gew.-Teilen eines verstärkenden Füllstoffs, ausgewählt aus der Gruppe, bestehend aus Siliciumdioxid-Füllstoff oder Gemischen davon mit Ruß, pro 100 Teile des genannten Elastomeren, wobei der Siliciumdioxid-Füllstoff eine spezifische Oberfläche nach BET von 150 bis 220 m²/g hat;
(3) 0,1 bis 150 Gew.-%, bezogen auf den genannten Siliciumdioxid-Füllstoff, einer Kombination aus einem Alkylalkoxysilan und einem zusätzlichen Verarbeitungshilfsmittel, ausgewählt aus der Gruppe, bestehend aus Fettsäureestern von hydrierten und nicht-hydrierten C₅- und C₆-Zuckern, Polyoxyethylenderivaten von Fettsäureestern von hydrierten und nicht-hydrierten C₅- und C₆-Zuckern und Gemischen davon;
(4) gegebenenfalls 0 bis 40 Gew.-Teilen eines nichtverstärkenden Füllstoffs pro 100 Teile Elastomeres;
(5) gegebenenfalls 0 bis 20 Gew.-% Bis[(triethoxysilyl)propyl]tetrasulfid, bezogen auf das Gewicht des genannten Siliciumdioxid-Füllstoffs; und
(6) ein Härtungs- bzw. Vulkanisationsmittel;
wobei das genannte Alkylalkoxysilan und das genannte zusätzliche Verarbeitungshilfsmittel zuerst mit mindestens etwas entweder des genannten verstärkenden Siliciumdioxid-Füllstoffs oder des genannten nicht-verstärkenden Füllstoffs vor dem Vermischen mit dem genannten Elastomeren vermischt werden und darauf aufgebracht werden, und
wobei die minimale Menge des Alkylalkoxysilans und des genannten weiteren Verarbeitungshilfsmittels etwa 1 Gew.-Teil beträgt; und
(b) Bewirkung der Vulkanisation.

2. Verfahren nach Anspruch 1, wobei das Alkylalkoxysilan durch die Formel (R₁)₂Si(OR₂)₂ oder R₁Si(OR₂)₃ angegeben wird, worin jede Gruppierung R₁ unabhängig aus der Gruppe, bestehend aus aliphatischen C₁- bis C₁₈-Resten und cycloaliphatischen C₅- bis C₁₂-Resten, ausgewählt wird; und wobei die Alkoxygruppen gleich oder verschieden sind, wobei jede Gruppe R₂ unabhängig 1 bis 6 Kohlenstoffatome enthält.

3. Verfahren nach Anspruch 2, wobei das Alkylalkoxysilan aus der Gruppe, bestehend aus Octyltriethoxysilan, Octyltrimethoxysilan, (3-Glycidoxypropyl)trimethoxysilan, (3-Glycidoxypropyl)triethoxysilan, Hexyltrimethoxysilan, Ethyltrimethoxysilan, Propyltriethoxysilan, Cyclohexyltrimethoxysilan, Cyclohexyltriethoxysilan, Dimethyldimethoxysilan, 3-Chlorpropyltriethoxysilan und i-Butyltriethoxysilan, ausgewählt wird.

4. Verfahren nach einem der Ansprüche 1 bis 3, wobei das Elastomere ein Dienmonomer-Homopolymeres oder ein Copolymeres von mindestens einem Dien und von mindestens einem Monomeren, ausgewählt aus der Gruppe, bestehend aus monovinylaromatischen Monomeren und Trienmonomeren, ist.

5. Verfahren nach einem der Ansprüche 1 bis 4, wobei das Verfahren weiterhin das Einmischen von unlöslichem Schwefel vor der Vulkanisation einschließt.

6. Verfahren nach einem der Ansprüche 1 bis 5, wobei das Elastomere ein Styrol-Butadien-Kautschuk ist.

7. Verfahren nach einem der Ansprüche 1 bis 6, wobei das Elastomere ein Copolymeres von Styrol-Butadien-Kautschuk und Butylkautschuk ist.

8. Verfahren nach einem der Ansprüche 1 bis 7, wobei das Elastomere weiterhin Naturkautschuk enthält.

9. Verfahren nach einem der Ansprüche 1 bis 8, wobei die Fettsäureester von hydrierten und nicht-hydrierten C₅- und C₆-Zuckern aus der Gruppe, bestehend aus Sorbitanmonooleat, Sorbitandioleat, Sorbitantrioleat, Sorbitansesquioleat, Sorbitanlaurat, Sorbitanpalmitat und Sorbitanstearat, ausgewählt sind, und wobei
die Polyoxyethylenderivate der Fettsäureester der hydrierten und nicht-hydrierten C₅- und C₆-Zucker aus der Gruppe, bestehend aus POE (20)-Sorbitanstearat; POE (20)-Sorbitanoleat; POE (20)-Sorbitantrioleat; POE (20)-Sorbitansesequioleat; POE (20)-Sorbitanlaurat und POE (20)-Sorbitanpalmitat, ausgewählt werden.

10. Verfahren nach einem der Ansprüche 1 bis 9, wobei das weitere Verarbeitungshilfsmittel ein Gemisch aus mindestens einem Fettsäureester von hydrierten und nicht-hydrierten C₅- und C₆-Zuckern und mindestens einem Polyoxyethylenderivat eines Fettsäureesters von hydrierten und nicht-hydrierten C₅- und C₆-Zuckern ist.

11. Verfahren nach einem der Ansprüche 1 bis 10, wobei die Menge des genannten verstärkenden Rußfüllstoffs im Bereich von 0 bis 50 Gew.-Teilen pro 100 Gew.-Teile Elastomeres liegt und wobei die Menge des genannten verstärkenden Siliciumdioxid-Füllstoffs im Bereich von 1 bis 100 Teilen pro 100 Teile Elastomeres liegt, mit der Maßgabe, dass dann, wenn die Menge des Rußes 0 ist, mindestens 30 phr Siliciumdioxid verwendet werden.

12. Compound bzw. Mischung bzw. Zusammensetzung, erhältlich nach dem Verfahren nach einem der Ansprüche 1 bis 11.

13. Pneumatischer Reifen, umfassend eine Laufflächenmasse, die mit einem Compound nach Anspruch 12 vulkanisiert worden ist.

14. Pneumatischer Reifen, umfassend eine Laufflächenmasse, die durch ein Verfahren nach einem der Ansprüche 1 bis 11 erhältlich ist.

## Revendications

1. Procédé pour la préparation d'un composé élastomère vulcanisé, chargé de silice, comprenant les étapes consistant à :
(a) mélanger
(1) 100 parties en poids d'un élastomère ;
(2) 5 à 100 parties en poids d'une charge de renforcement choisie dans le groupe consistant en une charge silicique ou leurs mélanges avec du noir de carbone, pour 100 parties dudit élastomère, ladite charge silicique ayant une surface spécifique BET de 150 à 220 m²/g ;
(3) 0,1 à 150 % en poids, sur la base de la charge silicique, d'une association d'un alkylalkoxysilane et d'un adjuvant de traitement supplémentaire choisis dans le groupe consistant en des esters d'acides gras de sucres en C₅ et C₆ hydrogénés et non hydrogénés, des dérivés de polyoxyéthylène d'esters d'acides gras de sucres en C₅ et C₆ hydrogénés et non hydrogénés et leurs mélanges ;
(4) facultativement 0 à 40 parties en poids d'une charge non renforçante, pour 100 parties d'élastomère ;
(5) facultativement 0 à 20 % en poids d'un tétrasulfure de bis[(triéthoxysilyl)-propyle], sur la base du poids de ladite charge silicique ; et
(6) un durcisseur ;
ledit alkylalkoxysilane et ledit adjuvant de traitement supplémentaire étant tout d'abord mélangés à, et portés sur, au moins une partie de ladite charge de renforcement à base de silice ou de ladite charge non renforçante avant le mélange audit élastomère,
et la quantité minimale de l'alkylalkoxysilane et dudit adjuvant de traitement supplémentaire étant égale à environ une partie en poids ; et
(b) effectuer la vulcanisation.

2. Procédé suivant la revendication 1, dans lequel l'alkylalkoxysilane est représenté par la formule (R₁)₂Si(OR₂)₂ ou R₁Si(OR₂)₃, dans laquelle chaque groupe R₁ est choisi indépendamment dans le groupe consistant en des groupes aliphatiques en C₁ à C₁₈ et des groupes cycloaliphatiques en C₅ à C₁₂ ; et dans lequel les groupes alkoxy sont identiques ou différents, chaque groupe R₂ contenant indépendamment 1 à 6 atomes de carbone.

3. Procédé suivant la revendication 2, dans lequel l'alkylalkoxysilane est choisi dans le groupe consistant en l'octyltriéthoxysilane, l'octyltriméthoxysilane, le (3-glycidoxypropyl)triméthoxysilane, le (3-glycidoxypropyl)-triéthoxysilane, l'hexyltriméthoxysilane, l'éthylméthoxysilane, le propyltriéthoxysilane, le cyclohexyltriméthoxysilane, le cyclohexyltriéthoxysilane, le diméthyldiméthoxysilane, le 3-chloropropyltriéthoxysilane et l'isobutyltriéthoxysilane.

4. Procédé suivant l'une quelconque des revendications 1 à 3, dans lequel l'élastomère est un homopolymère de monomère diénique ou un copolymère d'au moins un diène et d'au moins un monomère choisi dans le groupe consistant en des monomères aromatiques monovinyliques et des monomères triène.

5. Procédé suivant l'une quelconque des revendications 1 à 4, ledit procédé comprenant en outre le mélange de soufre insoluble avant vulcanisation.

6. Procédé suivant l'une quelconque des revendications 1 à 5, dans lequel l'élastomère est un caoutchouc styrène-butadiène.

7. Procédé suivant l'une quelconque des revendications 1 à 6, dans lequel l'élastomère est un copolymère de caoutchouc styrène-butadiène et de caoutchouc butyle.

8. Procédé suivant l'une quelconque des revendications 1 à 7, dans lequel l'élastomère contient en outre du caoutchouc naturel.

9. Procédé suivant l'une quelconque des revendications 1 à 8, dans lequel les esters d'acides gras de sucres en C₅ et C₆ hydrogénés ou non hydrogénés sont choisis dans le groupe consistant en le monooléate de sorbitanne, le dioléate de sorbitanne, le trioléate de sorbitanne, le sesquioléate de sorbitanne, le lauréate de sorbitanne, le palmitate de sorbitanne et le stéarate de sorbitanne, et dans lequel
les dérivés de polyoxyéthylène d'esters d'acides gras de sucres en C₅ et C₆ hydrogénés et non hydrogénés sont choisis dans le groupe consistant en stéarate de POE(20)-sorbitanne ; oléate de POE(20)-sorbitanne ; trioléate de POE(20)-sorbitanne ; sesquioléate de POE(20)-sorbitanne ; lauréate de POE(20)-sorbitanne et palmitate de POE(20)-sorbitanne.

10. Procédé suivant l'une quelconque des revendications 1 à 9, dans lequel l'adjuvant de traitement supplémentaire est un mélange d'au moins un ester d'acide gras de sucres en C₅ et C₆ hydrogénés et non hydrogénés et d'au moins un dérivé de polyoxyéthylène d'un ester d'acide gras de sucres en C₅ et C₆ hydrogénés et non hydrogénés.

11. Procédé suivant l'une quelconque des revendications 1 à 10, dans lequel la quantité de ladite charge de renforcement à base de noir de carbone est comprise entre 0 et 50 parties en poids, pour 100 parties en poids d'élastomère, et la quantité de ladite charge silicique de renforcement est comprise entre 1 et 100 parties, pour 100 parties d'élastomère, sous réserve que, lorsque la quantité de noir de carbone est égale à 0, au moins 30 phr de silice sont utilisés.

12. Composé pouvant être obtenu par un procédé suivant l'une quelconque des revendications 1 à 11.

13. Bandage pneumatique comprenant une composition de bande de roulement vulcanisée à partir d'un composé de la revendication 12.

14. Bandage pneumatique comprenant une composition de bande de roulement pouvant être obtenue par un procédé de l'une quelconque des revendications 1 à 11.
